# EUROPEAN PATENT SPECIFICATION

(11) **EP 4 304 151 B1**
(45) Date of publication and mention of the grant of the patent: **02.09.2026**
(21) Application number: 22182725.6
(22) Date of filing: 04.07.2022
(51) Int. Cl.: H04L 47/2425, H04L 47/24

(54) **REGULATING A QUALITY OF EXPERIENCE IN A NETWORK**
REGULIERUNG DER ERFAHRUNGSQUALITÄT IN EINEM NETZWERK
RÉGULATION DE LA QUALITÉ D'EXPÉRIENCE DANS UN RÉSEAU

(43) Date of publication of application: 10.01.2024
(73) Proprietor: Nokia Solutions and Networks Oy, 02610 Espoo (FI)
(72) Inventor: BEURA, Ranjan Kumar, Chennai (IN); CUFFARO, Angelo, Laval (CA); R, Jose, Chennai (IN); RAJAMANICKAM, Thirumurthy, Cary (US)
(74) Representative: Nokia EPO representatives

(56) References cited:
- US-A1- 2007 201 472
- US-A1- 2016 142 326
- US-B2- 7 860 990

## Description

### Technical Field

Embodiments of the present disclosure generally relate to a network apparatus, a Wi-Fi access point and a method for regulating a quality of experience in a network.

### Background

802.11 Wi-Fi systems utilise Wi-Fi Multimedia (WMM) queuing (based on 802.11e standard) to prioritise some services, such as voice and video, over other services, such as best effort or background internet traffic. WMM provides basic quality of service (QoS) features to IEEE 802.11 networks. WMM prioritises traffic according to four Access Categories (AC): voice, video, best effort, and background.

WMM maintains the priority of audio, video and voice traffic over other applications which are less time critical. Using QoS, WMM ensures that the applications that require better throughput and performance are inserted in queues with higher priority. For example, video and audio applications are given higher priority over applications such as FTP. That is, less time-critical traffic (such as downloading large files, where a small time delay is acceptable) is delayed in favour of higher priority traffic (for example, phone conversations).

In particular, WMM defines the following four queues, in decreasing order of priority:
- Voice - the highest priority queue with minimum delay, making it ideal for applications such as voice over IP (VoIP) and streaming media;
- Video - the second highest priority queue with low delay, suitable for video applications;
- Best Effort - the medium priority queue with medium delay, used by most standard IP applications;
- Background - the lowest priority queue with high throughput, frequently used by applications that are not time-sensitive, but require high throughput (such as FTP).

Differentiated services (DiffServ) is a computer networking architecture that specifies a simple and scalable mechanism for classifying and managing network traffic and providing QoS on modern IP networks. DiffServ can, for example, be used to provide low latency to critical network traffic such as voice or streaming media, while providing a simple best-effort service to non-critical services such as web traffic or file transfers. DiffServ uses a 6-bit differentiated services code point (DSCP) in the 8-bit differentiated services (DS) field in the IP header for packet classification purposes. The DS field replaces the outdated IPv4 type of service (TOS) field.

However, in the current state of art, most real-time applications like video streaming or gaming do not make use of the DSCP value and thus the WMM priority classes. The Differentiated Services Code Point (DSCP) packet header is left unmarked and as a result all the packets from the priority applications will be mapped to the default WMM best effort (BE) queue. Thus, the real-time applications such as video streaming or gaming will not be prioritised over latency insensitive applications such as FTP downloads. For low latency applications such as gaming and 4k/8k video streaming, the user experience may be adversely affected when there is congestion on the Wi-Fi medium. In cases where applications do provide a DSCP value, there is no mechanism for analysing the performance of the real-time applications and regulating a quality of experience as required.

US 2007/201472 A1 addresses the prioritization of packets of a call within on or more sessions between two endpoints, source and destination. The prioritization is performed at a session controller based on the session data (of one single session) and based only on the type of service (the media type, e.g., video or voice) by modifying a transmission priority indicator of IP packets transmitted over the call and being effective in a part of the network, irrespective of a congestion or a perceived demand.

US 7 860 990 B2 addresses session layer parameters with reference to an alarm condition to determine whether a route should be modified at a later stage. It does not cover the actual traffic condition or latency, rather a delay indicator is determined "[u]pon termination of a connection between endpoints 180", thus not during the data transmission and, therefore, cannot be a means for dynamically changing the prioritization of packets during an ongoing transmission.

US 2016/142326 A1 addresses a "flexible control based on QoS information" in a communication system which establishes a logical path over a network in the context of EPS (Evolved Packet System) using E-UTRAN (Evolved Universal Terrestrial Radio Access Network), but without an access point sending latency or delay information to the control apparatus. Rather, the QoS information pertains to the core network, i.e. within the logical path therein.

### Summary

An objective of the present disclosure is to provide means and mechanisms for regulating and improving quality of experience in a network by leveraging prioritising provisions. The foregoing and other objectives are achieved by the features of the independent claims.

Further implementation forms are apparent from the dependent claims, the description and the Figures.

A first aspect of the present disclosure provides a network apparatus for a telecommunication network, the network apparatus comprising communication circuitry configured to receive, from a Wi-Fi access point, one or more latency metrics of traffic associated with a traffic identifier, TID, and associated with a service set comprising user equipment and, a processor configured to determine a quality of service, QoS, performance for the user equipment on the basis of the received latency metric, wherein, in response to the processor determining that the QoS performance is below a predetermined threshold value, the communication circuitry is configured to transmit, to the Wi-Fi access point, a request to increase a priority of packets destined for or originating from the the service set comprising user equipment, whereby to reduce latency of traffic associated with the user equipment, and periodically request data representing an updated latency metric of traffic associated with the user equipment from the Wi-Fi access point.

Accordingly, the quality of experience can be improved by leveraging prioritising provisions and reducing latency on a per-client basis, and performance of real-time applications can be assessed on a regular basis. Traffic performance can be assessed according to various categories, for example according to type of data being transmitted.

In an implementation of the first aspect, in response to the processor determining, based on the received updated latency metric, that the user equipment QoS performance indicates that the QoS of the user equipment is above the predetermined threshold value, the communication circuitry can transmit, to the Wi-Fi access point, a request to stop increasing the priority of packets destined for or originating from the user equipment. Thus, network traffic can be managed effectively by employing a feedback loop to prioritize packets according to real-time requirements.

In an embodiment, a latency metric of traffic associated with the user equipment can comprise at least one of delay and jitter, and wherein the processor is arranged to compare the received latency metric to predetermined measures representing jitter and/or delay for each traffic class related to the TID, and, on the basis of the comparison, determine the QoS performance. Thus, QoS performance can be accurately assessed.

A second aspect of the present disclosure provides a Wi-Fi access point in a telecommunication network, the Wi-Fi access point comprising a processor, a memory coupled to the processor, the memory configured to store program code executable by the processor, the program code comprising one or more instructions, whereby to cause the Wi-Fi access point to measure one or more latency metrics of traffic associated with a traffic identifier, TID, and associated with a service set comprising the user equipment, transmit the latency metric to a network apparatus of the telecommunication network, receive data representing a request to increase a priority of packets destined for or originating from the user equipment, whereby to reduce latency of traffic associated with the user equipment, in response to receiving the request to increase the priority of packets, modify a differentiated services code point, DSCP, in an IP header of a packet among the packets destined for or originating from the user equipment, whereby to assign the packets to a higher priority wireless multimedia, WMM, queue, and periodically measure the latency metric of traffic associated with the user equipment.

Accordingly, the quality of experience can be improved by leveraging prioritising provisions and reducing latency on a per-client basis. An existing mechanism can be employed to control the priority of the traffic without requiring substantial modification.

In an implementation of the second aspect, the program code can further comprise one or more instructions whereby to cause the Wi-Fi access point to allocate additional airtime to user equipment.

A third aspect of the present disclosure provides a method for regulating a quality of experience in a network, the method comprising measuring, at a Wi-Fi access point, a latency metric of traffic with a traffic identifier, TID, and associated with a service set comprising a user equipment, transmitting the latency metric to a network apparatus, determining, using the network apparatus, whether a quality of service, QoS, performance for the user equipment determined on the basis of the received latency metric is below a predetermined threshold value, on the basis of the determination, transmitting, to the Wi-Fi access point, a request to increase a priority of packets destined for or originating from the service set comprising the user equipment, whereby to reduce latency of traffic associated with the user equipment, in response to receiving the request to increase the priority of packets, modifying a differentiated services code point, DSCP, in an IP header of a packet among the packets destined for or originating from the user equipment, whereby to assign the packets to a higher priority wireless multimedia, WMM, queue, and periodically measuring the latency metric of traffic associated with the user equipment.

Accordingly, the quality of experience can be improved by leveraging prioritising provisions and reducing latency on a per-client basis.

In an implementation of the third aspect, the method can further comprise allocating, by the Wi-Fi access point, additional airtime to the user equipment. The method can further comprise transmitting, from the network apparatus to the Wi-Fi access point, a request to cease modification of the DSCP. The method can further comprise measuring the latency metric in response to a request generated by the network apparatus.

The latency metric can comprise at least one of delay and jitter, and determining, using the network apparatus, whether the quality of service, QoS, performance for the user equipment determined on the basis of the received latency metric is below a predetermined threshold value can comprise comparing the received latency metric to predetermined measures representing jitter and delay for each traffic class related to the TID, and, on the basis of the comparison, determining the QoS performance.

### Brief description of the figures

Some embodiments will now be described by way of example with reference to the figures, in which:
Figure 1 schematically depicts a network apparatus for a telecommunication network, in accordance with an example embodiment;
Figure 2 schematically depicts a Wi-Fi access point in a telecommunication network, in accordance with an example embodiment;
Figure 3 schematically depicts a method for regulating a quality of experience in a network, in accordance with an example embodiment;
Figure 4 schematically depicts a telecommunication network, in accordance with an example embodiment.

### Detailed Description

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

Currently, telecommunication networks rely on an 802.11 standardised feature called Mirrored Stream Classification Service (MSCS), which relies on the Wi-Fi client to provide the DSCP marking. Unfortunately, many Wi-Fi clients do not provide any DSCP marking. The MSCS feature relies on the client application to properly mark the uplink packets. MSCS then will apply the same markings to the downlink packets.

According to an example, there is provided a means to improve the latency (for example, delay and jitter) for Wi-Fi clients and improves user experience by leveraging prioritising provisions in a feedback loop.

Examples in the present disclosure can be provided as methods, systems or machine-readable instructions, such as any combination of software, hardware, firmware or the like. Such machine-readable instructions may be included on a computer readable storage medium (including but not limited to disc storage, CD-ROM, optical storage, etc.) having computer readable program codes therein or thereon.

The present disclosure is described with reference to flow charts and/or block diagrams of the method, devices and systems according to examples of the present disclosure. Although the flow diagrams described above show a specific order of execution, the order of execution may differ from that which is depicted. Blocks described in relation to one flow chart may be combined with those of another flow chart. In some examples, some blocks of the flow diagrams may not be necessary and/or additional blocks may be added. It shall be understood that each flow and/or block in the flow charts and/or block diagrams, as well as combinations of the flows and/or diagrams in the flow charts and/or block diagrams can be realized by machine readable instructions.

The machine-readable instructions may, for example, be executed by a machine such as a general-purpose computer, user equipment such as a smart device, e.g., a smart phone, a special purpose computer, an embedded processor or processors of other programmable data processing devices to realize the functions described in the description and diagrams. In particular, a processor or processing apparatus may execute the machine-readable instructions. Thus, modules of apparatus may be implemented by a processor executing machine readable instructions stored in a memory, or a processor operating in accordance with instructions embedded in logic circuitry. The term 'processor' is to be interpreted broadly to include a CPU, processing unit, ASIC, logic unit, or programmable gate set etc. The methods and modules may all be performed by a single processor or divided amongst several processors.

Such machine-readable instructions may also be stored in a computer readable storage that can guide the computer or other programmable data processing devices to operate in a specific mode. For example, the instructions may be provided on a non-transitory computer readable storage medium encoded with instructions, executable by a processor.

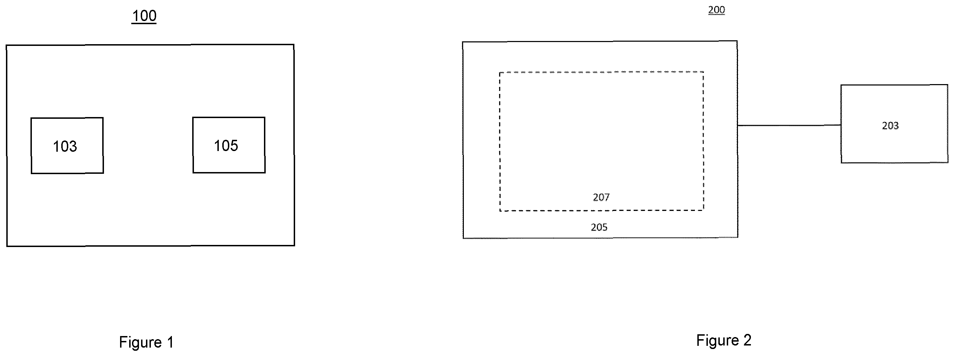

Figure 1 schematically depicts a network apparatus for a communication network, in accordance with an example embodiment. The network apparatus 100 comprises communication circuitry 103 configured to receive, from a Wi-Fi access point (AP), a latency metric of traffic associated with user equipment. The network apparatus 100 also comprises a processor 105 configured to determine a quality of service, QoS, performance for the user equipment on the basis of the received latency metric. In response to the processor determining that the QoS performance is below a predetermined threshold value, the communication circuitry 103 is configured to transmit, to the Wi-Fi access point, a request to increase a priority of packets destined for the user equipment, whereby to reduce latency of traffic associated with the user equipment.

The user equipment may comprise any Wi-Fi client such as user equipment, e.g., a smartphone, tablet computer, smart watch, laptop computer, Internet-of-Things (IoT) device and others. The predetermined threshold value may comprise a value indicating that a latency of the user equipment is poor, and can be determined on an ad-hoc basis in view of the prevailing network conditions and/or as part of a setup process in which it can be predefined by an administrator for example. The request to increase the priority of packets destined for the user equipment may comprise a request to increase the WMM priority of the user equipment.

The communication circuitry 103 may be arranged to periodically request data representing an updated latency metric of traffic associated with the user equipment from the Wi-Fi access point. The network apparatus 100 may be local to the Wi-Fi access point - for example, the apparatus 100 may be part of the AP's local network. The network apparatus 100 may also be cloud-based and thus entirely remote.

In response to the processor 105 determining, based on the received updated latency metrics, that the user equipment QoS performance indicates that the QoS of the user equipment is above the predetermined threshold value, the communication circuitry 103 may be arranged to transmit, to the Wi-Fi access point, a request to stop increasing the priority of packets destined for the user equipment. The priority may therefore revert to a previous value.

The communication circuitry 103 may be configured to receive, from the Wi-Fi access point, latency metrics of traffic associated with a traffic identifier (TID) and/or latency metrics of traffic associated with a service set comprising the user equipment. The traffic identifier is an identifier used to classify a packet in Wireless LAN. When a base station receives an 802.11 frame with TID set for audio, for example, priority is set higher than that of a data frame for, e.g., best effort purposes. In other words, the traffic associated with the TID can be equated to traffic associated with a WMM access class. The service set is a group of wireless network devices which share a service set identifier, SSID. As such, the communication circuitry 103 may be arranged to transmit a request to increase the priority of packets destined for the service set comprising the user equipment, whereby to reduce latency of traffic associated therewith.

The latency metrics of traffic associated with the user equipment may comprise delay and jitter. Delay relates to the time it takes for a packet to travel from one endpoint to another. Jitter relates to a variance in latency. The higher the jitter, the more inconsistent the response times of a network are.

The processor 105 may be arranged to use machine learning (for example, statistics and various threshold values) to determine acceptable jitter and delay metrics for each type of traffic class (that is, each WMM access class). Based on the determined acceptable values, the processor 105 may categorise and aggregate the latency metrics of traffic associated with at least one client (for example, the user equipment) to determine the QoS performance.

The processor 105 may be arranged to compare the received latency metrics to predetermined measures representing jitter and delay metrics for each traffic class related to the TID, and, on the basis of the comparison, determine the QoS performance. In one example, the processor 105 may maintain a moving average of both jitter and delay and calculate a variance of each latency metric on a per client basis. The processor 105 may then calculate an average of the delay and jitter metrics on a per service set identifier basis, with the latency metrics being acquired from each client associated with a specific SSID.

In addition, when determining the average delay and jitter metrics on a per SSID basis, the processor 105 may give some clients more weight than others, depending on how active the client is and the variance of the client. If the variance is above a certain threshold, then the determination of the QoS performance may be skipped because of the latency measurements fluctuating too much. If the measurements are found to not be fluctuating too much (i.e. they are below a fluctuation threshold), the QoS performance may be categorised.

For example, if both the average delay and jitter are found to be below first threshold values, the QoS performance may be categorised as good. If the average delay and jitter are found to be above the first threshold values, but below second threshold values, the QoS performance may be categorised as average. If the average delay and jitter are found to be above the second threshold values, the QoS performance may be categorised as poor.

To prevent oscillation between different categories, the processor 105 may make use of a hysteresis value of, for example, 20 % between each category on subsequent determinations. For example, if the QoS of the user equipment has been categorised as good, the processor 105 may require the average delay and jitter to be greater than 120% of the first threshold values for the QoS to be categorised as average or poor.

The processor 105 may categorise the QoS performance of not only the user equipment (i.e. an individual client), but also of an entire service set associated with the SSID. In such case, the average delay and jitter measurement from each client associated with a specific service set may be averaged before the processor 105 determines the QoS performance of the service set. The network apparatus 100 may then use the communication circuitry 103 to transmit, to the Wi-Fi access point, a request to increase the priority of packets destined for all clients belonging to the service set.

Figure 2 schematically depicts a Wi-Fi access point in a telecommunication network, in accordance with an example embodiment. The Wi-Fi access point 200 may comprise a processor 203 and a memory 205 coupled to the processor 203, the memory configured to store program code executable by the processor 203, the program code comprising one or more instructions 207, whereby to cause the Wi-Fi access point 200 to measure a latency metric of traffic associated with user equipment, transmit the latency metric to a network apparatus of the communication network, and receive, from the network apparatus, data representing a request to increase a priority of packets destined for the user equipment, whereby to reduce latency of traffic associated with the user equipment. The network apparatus may comprise, for example, the network apparatus 100 described above.

The program code 207 may further comprise one or more instructions whereby to cause the Wi-Fi access point 200 to, in response to receiving the request to increase the priority of packets, modify a differentiated services code point, DSCP, in an IP header of a packet among the packets destined for the user equipment, whereby to assign the packets to a higher priority wireless multimedia, WMM, queue. Typically, packets not having a DSCP marking are defaulted to the best effort queue. If the packets destined for the user equipment have no DSCP marking, and there is significant congestion in the system, the Wi-Fi access point 200 may remark the DSCP value of the packets such that they are mapped to a higher priority queue, such as a video queue.

The program code 207 may further comprise one or more instructions whereby to cause the Wi-Fi access point 200 to allocate additional airtime to user equipment. This may be achieved using the airtime fairness (ATF) feature. For example, the Wi-Fi access point 200 may allocate a guaranteed percentage of airtime to the user equipment at the expense of other clients, thus prioritising the user equipment. Here, the term 'airtime' refers to the radio resources that are allocated, measured as the amount of the medium used by the client to transmit its packets.

The program code 207 may further comprise one or more instructions whereby to cause the Wi-Fi access point 200 to periodically measure the latency metrics of traffic associated with the user equipment, whereby to enable the network apparatus to determine whether the user equipment QoS performance indicates that the QoS of the user equipment is above the predetermined threshold value. The measurement may be locally triggered within the Wi-Fi access point 200. Alternatively, the Wi-Fi access point 200 may receive a request for latency measurement from the network apparatus.

The traffic and packets (e.g. internet browsing, file transfer, video and voice calls) generated by the Wi-Fi clients, including the user equipment, are mapped to a corresponding WMM queue. The user equipment's traffic may be varied and thus may be mapped to multiple WMM queues over an interval. The Wi-Fi access point 200 may be arranged to measure latency metrics of traffic associated with a traffic identifier (i.e. traffic mapped to a specific WMM queue), and/or latency metrics of traffic associated with a service set comprising the user equipment.

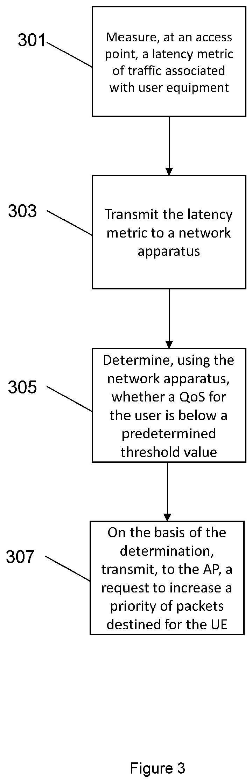

Figure 3 schematically depicts a method for regulating a quality of experience in a network, in accordance with an example embodiment. The method comprises, in block 301, measuring, at a Wi-Fi access point, a latency metric of traffic associated with user equipment. In block 303, the method comprises transmitting the latency metric to a network apparatus. In block 305, the method comprises determining, using the network apparatus, whether a quality of service, QoS, performance for the user equipment determined on the basis of the received latency metric is below a predetermined threshold value. The method comprises, in block 307, on the basis of the determination, transmitting, to the Wi-Fi access point, a request to increase a priority of packets destined for the user equipment, whereby to reduce latency of traffic associated with the user equipment. The network apparatus may be, for example, the network apparatus described herein in relation to Figure 1. Similarly, the Wi-Fi access point may be, for example, the Wi-Fi access point described herein in relation to Figure 2.

In response to receiving the request to increase the priority of packets, the Wi-Fi access point may modify a differentiated services code point, DSCP, in an IP header of a packet among the packets destined for the user equipment, whereby to assign the packets to a higher priority wireless multimedia, WMM, queue. Alternatively or additionally, the Wi-Fi access point may allocate additional airtime to the user equipment.

The method may comprise, at the Wi-Fi access point, periodically measuring the latency metrics of traffic associated with the user equipment, whereby to enable the network apparatus to determine whether the user equipment QoS performance indicates that the QoS of the user equipment is above the predetermined threshold value. The method may further comprise transmitting, from the network apparatus to the Wi-Fi access point, a request to cease modification of the DSCP. In other words, the network apparatus may monitor the QoS performance of the user equipment and request that the AP stops DSCP re-marking and/or removes the additional medium airtime if the QoS performance improves.

Measuring the latency metric of traffic associated with user equipment may occur in response to a request generated by the Wi-Fi access point or by the network apparatus. Measuring the latency of traffic associated with user equipment may comprise measuring latency metrics of traffic associated with a traffic identifier (TID) and/or associated with a service set comprising the user equipment. Transmitting the request to increase the priority of packets destined for the user equipment may comprise transmitting a request to increase the priority of packets destined for the service set comprising the user equipment.

The latency metric may comprise at least one of delay and jitter. The latency and jitter values may be embedded into two new User Services Platform (USP) attributes to thereby describe performance and statistics collected for the user equipment.

Determining the QoS performance may comprise comparing the received latency metric to predetermined measures representing jitter and delay metrics for each traffic class related to the TID, and, on the basis of the comparison, determining the QoS performance.

The method may further comprise the step of displaying information related to the QoS performance of the user equipment, and receiving a user input to increase the priority of packets destined for the user equipment. For example, the method may comprise the step of providing a means for the user to select and prioritize the user equipment. When the user equipment is prioritized, the medium airtime allocated to the user equipment may be increased such that more airtime is allocated to the user equipment, compared to other devices on the network. In addition, when the user equipment is prioritized, the packets destined therefor may have their DSCP value re-marked such that the packets are placed in the high-priority WMM video queue.

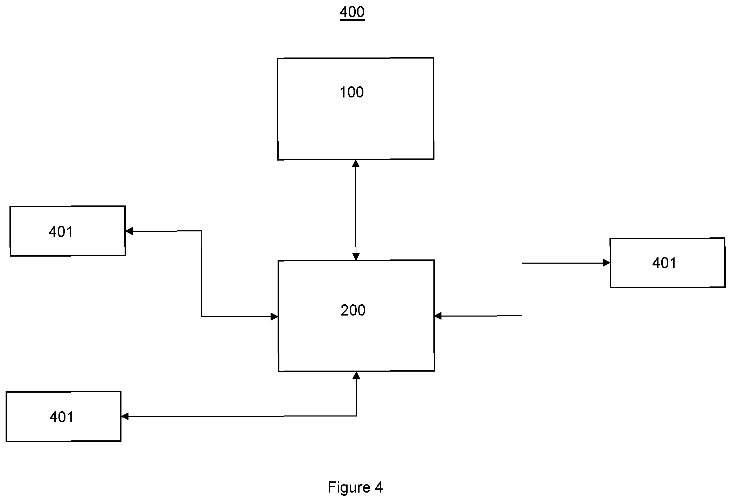

Figure 4 schematically depicts a telecommunication network, in accordance with an example embodiment. The telecommunication network 400 may comprise the network apparatus 100, the Wi-Fi access point 200, and at least one client 401, the client comprising user equipment.

According to an example, machine-readable instructions can be loaded onto a computer or other programmable data processing devices, so that the computer or other programmable data processing devices perform a series of operations to produce computer-implemented processing, thus the instructions executed on the computer or other programmable devices provide an operation for realizing functions specified by flow(s) in the flow charts and/or block(s) in the block diagrams.

Further, the teachings herein may be implemented in the form of a computer or software product, such as a non-transitory machine-readable storage medium, the computer software or product being stored in a storage medium and comprising a plurality of instructions, e.g., machine readable instructions, for making a computer device implement the methods recited in the examples of the present disclosure.

In some examples, some methods can be performed in a cloud-computing or networkbased environment. Cloud-computing environments may provide various services and applications via the Internet. These cloud-based services (e.g., software as a service, platform as a service, infrastructure as a service, etc.) may be accessible through a web browser or other remote interface of the user equipment for example. Various functions described herein may be provided through a remote desktop environment or any other cloud-based computing environment.

While various embodiments have been described and/or illustrated herein in the context of fully functional computing systems, one or more of these exemplary embodiments may be distributed as a program product in a variety of forms, regardless of the particular type of computer-readable-storage media used to actually carry out the distribution. The embodiments disclosed herein may also be implemented using software modules that perform certain tasks. These software modules may include script, batch, or other executable files that may be stored on a computer-readable storage medium or in a computing system. In some embodiments, these software modules may configure a computing system to perform one or more of the exemplary embodiments disclosed herein. In addition, one or more of the modules described herein may transform data, physical devices, and/or representations of physical devices from one form to another. The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the scope of the instant disclosure. The embodiments disclosed herein should be considered in all respects illustrative and not restrictive.

## Claims

1. A network apparatus (100) for a telecommunication network (400), the network apparatus comprising:
communication circuitry (103) configured to receive, from a Wi-Fi access point (200), one or more latency metrics of traffic associated with a traffic identifier, TID, and associated with a service set comprising a user equipment; and
a processor (105) configured to determine a quality of service, QoS, performance for the user equipment on the basis of the received latency metric,
wherein, in response to the processor (105) determining that the QoS performance is below a predetermined threshold value, the communication circuitry (103) is configured to:
transmit, to the Wi-Fi access point (200), a request to increase a priority of packets destined for or originating from the service set comprising the user equipment, whereby to reduce latency of traffic associated with the user equipment; and
periodically request data representing an updated latency metric of traffic associated with the user equipment from the Wi-Fi access point (200).

2. The network apparatus of claim 1, wherein, in response to the processor (105) determining, based on the received updated latency metric, that the user equipment QoS performance indicates that the QoS of the user equipment is above the predetermined threshold value, the communication circuitry (103) is arranged to transmit, to the Wi-Fi access point (200), a request to stop increasing the priority of packets destined for or originating from the user equipment.

3. The network apparatus of claim 1, wherein a latency metric of traffic associated with the user equipment comprises at least one of delay and jitter, and wherein the processor (105) is arranged to compare the received latency metric to predetermined measures representing jitter and/or delay for each traffic class related to the TID, and, on the basis of the comparison, determine the QoS performance.

4. A Wi-Fi access point (200) in a telecommunication network, the Wi-Fi access point comprising:
a processor (203);
a memory (205) coupled to the processor (203), the memory configured to store program code executable by the processor (203), the program code comprising one or more instructions (207), whereby to cause the Wi-Fi access point (200) to:
measure one or more latency metrics of traffic associated with a traffic identifier, TID, and associated with a service set comprising a user equipment;
transmit the latency metric to a network apparatus (100) of the telecommunication network;
receive data representing a request to increase a priority of packets destined for or originating from the user equipment, whereby to reduce latency of traffic associated with the user equipment;
in response to receiving the request to increase the priority of packets, modify a differentiated services code point, DSCP, in an IP header of a packet among the packets destined for or originating from the user equipment, whereby to assign the packets to a higher priority wireless multimedia, WMM, queue; and
periodically measure the latency metric of traffic associated with the user equipment.

5. The Wi-Fi access point (200) of claim 4, wherein the program code further comprises one or more instructions (207) whereby to cause the Wi-Fi access point to allocate additional airtime to the user equipment.

6. A method for regulating a quality of experience in a network, the method comprising:
measuring (301), at an Wi-Fi access point (200), a latency metric of traffic with a traffic identifier, TID, and associated with a service set comprising a user equipment;
transmitting (303) the latency metric to a network apparatus (100);
determining (305), using the network apparatus (100), whether a quality of service, QoS, performance for the user equipment determined on the basis of the received latency metric is below a predetermined threshold value;
on the basis of the determination, transmitting (307), to the Wi-Fi access point (200), a request to increase a priority of packets destined for or originating from the service set comprising the user equipment, whereby to reduce latency of traffic associated with the user equipment;
in response to receiving the request to increase the priority of packets, modifying a differentiated services code point, DSCP, in an IP header of a packet among the packets destined for or originating from the user equipment, whereby to assign the packets to a higher priority wireless multimedia, WMM, queue; and
periodically measuring the latency metric of traffic associated with the user equipment.

7. The method of claim 6, further comprising the step of allocating, by the Wi-Fi access point (200), additional airtime to the user equipment.

8. The method of claim 6, further comprising:
transmitting, from the network apparatus (100) to the Wi-Fi access point (200), a request to cease modification of the DSCP.

9. The method of any of claims 6 to 8, further comprising:
measuring the latency metric in response to a request generated by the network apparatus (100).

10. The method of any of claims 6 to 9, wherein the latency metric comprises at least one of delay and jitter, and wherein determining, using the network apparatus (100), whether the quality of service, QoS, performance for the user equipment determined on the basis of the received latency metric is below a predetermined threshold value comprises:
comparing the received latency metric to predetermined measures representing jitter and delay for each traffic class related to the TID, and, on the basis of the comparison, determining the QoS performance.

## Patentansprüche

1. Ein Netzwerkapparat (100) für ein Telekommunikationsnetz (400), der Netzwerkapparat bestehend aus:
einer Kommunikationsschaltung (103), die so konfiguriert ist, dass sie von einem WLAN-Zugangspunkt (200) eine oder mehrere Latenzmetriken des Verkehrs empfangen, der mit einer Verkehrskennung, TID, und einem Serviceset aus Benutzerausrüstung verbunden ist; und
einem Prozessor (105), der konfiguriert ist, um eine Quality of Service, QoS, Erfüllung für die Benutzerausrüstung auf Basis der empfangenen Latenzmetrik zu bestimmen,
wobei als Reaktion darauf, dass der Prozessor (105) feststellt, dass die QoS-Erfüllung unter einem vorgegebenen Schwellenwert liegt, die Kommunikationsschaltung (103) so konfiguriert wird:
an den WLAN-Zugangspunkt (200) eine Aufforderung zu übermitteln, die Priorität von Paketen zu erhöhen, die für das Serviceset der Benutzerausrüstung bestimmt sind oder von ihnen stammen, um die Latenz des zu der Benutzerausrüstung gehörigen Datenverkehrs zu reduzieren; und
periodisch Daten anzufordern, die eine aktualisierte Latenzmetrik des zu der Benutzerausrüstung gehörigen Datenverkehrs vom WLAN-Zugangspunkt (200) repräsentiert.

2. Das Netzwerkgerät nach Anspruch 1, bei dem die Kommunikationsschaltung (103) so angelegt ist, dass, in Erwiderung darauf, dass der Prozessor (105) anhand der empfangenen aktualisierten Latenzmetrik feststellt, dass die QoS-Erfüllung der Benutzerausrüstung anzeigt, dass die QoS der Benutzerausrüstung über dem vorgegebenen Schwellenwert liegt, an den WLAN-Zugangspunkt (200) eine Aufforderung gesendet wird, die Priorität von Paketen nicht mehr zu erhöhen, die für die Benutzerausrüstung bestimmt sind oder von ihnen stammen.

3. Das Netzwerkgerät nach Anspruch 1, bei dem die Latenzmetrik des mit der Benutzerausrüstung verbundenen Verkehrs Verzögerungen und/oder Jitter umfasst, und in dem der Prozessor (105) so eingerichtet ist, dass er die empfangene Latenzmetrik mit vordefinierten Messwerten vergleicht, die Jitter und/oder Verzögerung für jede Verkehrsklasse in Bezug auf die TID darstellen, und auf Grundlage des Vergleichs die QoS-Erfüllung ermittelt.

4. Ein WLAN-Zugangspunkt (200) in einem Telekommunikationsnetz, der WLAN-Zugangspunkt beinhaltend:
einen Prozessor (203);
einen Speicher (205), der mit dem Prozessor gekoppelt ist (203) und konfiguriert ist, um vom Prozessor ausführbaren Programmcode zu speichern (203), der Programmcode eine oder mehrere Anweisungen (207) enthaltend, wodurch der WLAN-Zugangspunkt (200) veranlasst wird:
eine oder mehrere Latenzmetriken des Verkehrs zu messen, der mit einer Verkehrskennung, TID, und einem Serviceset aus Benutzerausrüstung assoziiert ist;
die Latenzmetrik an ein Netzwerkgerät (100) des Telekommunikationsnetzes zu übertragen;
Daten zu empfangen, die eine Aufforderung zur Erhöhung einer Priorität von Paketen darstellen, die für die Benutzerausrüstung bestimmt sind oder von ihnen stammen, um die Latenz des mit der Benutzerausrüstung verbundenen Datenverkehrs zu reduzieren;
als Antwort auf den Erhalt der Aufforderung zur Erhöhung der Priorität von Paketen einen differenzierten Dienste-Codepunkt, DSCP, in einem IP-Header eines Pakets unter den Paketen zu modifizieren, die für die Benutzerausrüstung bestimmt sind oder von ihnen stammen, wodurch die Pakete einer höher priorisierten drahtlosen Multimedia-Warteschlange, WMM, zugewiesen werden; und
periodisch die Latenzmetrik des Verkehrs, der mit der Benutzerausrüstung verbunden ist, zu messen.

5. Der WLAN-Zugangspunkt (200) nach Anspruch 4, wobei der Programmcode zusätzlich eine oder mehrere Anweisungen (207) enthält, wonach der WLAN-Zugangspunkt der Benutzerausrüstung zusätzliche Sendezeit zuweist.

6. Ein Verfahren zur Regulierung einer Quality of Service, QoS, in einem Netzwerk, das Verfahren umfassend:
Messung (301), an einem WLAN-Zugangspunkt (200), einer Latenzmetrik für Verkehr mit einer Verkehrskennung, TID, der einem Serviceset zugeordnet ist, der Benutzerausrüstung umfasst;
Übertragung (303) der Latenzmetrik an ein Netzwerkgerät (100);
Feststellung (305), unter Verwendung des Netzwerkapparats (100) und bestimmt auf Basis der empfangenen Latenzmetrik, ob eine Quality-of-Service-, QoS-, Erfüllung für die Benutzerausrüstung unter einem vorgegebenen Schwellenwert liegt;
auf Grundlage der Feststellung, Übermittlung (307) an den WLAN-Zugangspunkt (200) einer Aufforderung zur Erhöhung der Priorität von Paketen, die an den Serviceset der Benutzerausrüstung bestimmt sind oder von ihnen stammen, um die Latenz des mit der Benutzerausrüstung verbundenen Verkehrsverkehrs zu reduzieren;
als Antwort auf Erhalt der Aufforderung, Erhöhung der Priorität der Pakete, Modifizierung eines Differentiated Services-Codepunkt, DSCP, in einem IP-Header eines Pakets unter den Paketen, die für die Benutzerausrüstung bestimmt oder von ihnen stammen, wodurch die Pakete einer höherprioritären drahtlosen Multimedia-Warteschlange, WMM, zugewiesen werden; und
periodische Messung der Latenzmetrik des Verkehrs, der mit der Benutzerausrüstung verbunden ist.

7. Das Verfahren nach Anspruch 6, ferner umfassend den Schritt, dem WLAN-Zugangspunkt (200) zusätzliche Sendezeit für die Nutzerausrüstung zuzuweisen.

8. Das Verfahren nach Anspruch 6, ferner umfassend:
Übermittlung, vom Netzwerkapparat (100) zum WLAN-Zugangspunkt (200), einer Aufforderung, die Änderung des DSCP einzustellen.

9. Das Verfahren nach einem der Ansprüche 6 bis 8, ferner umfassend:
Messung der Latenzmetrik als Reaktion auf eine vom Netzwerkapparat (100) generierte Aufforderung.

10. Das Verfahren nach einem der Ansprüche 6 bis 9, bei dem die Latenzmetrik Verzögerungen und/oder Jitter umfasst und bei dem mit Hilfe des Netzwerkapparats (100) bestimmt wird, ob die Quality of Service, QoS, Erfüllung, ermittelt auf Basis der empfangenen Latenzmetrik, für die Nutzerausrüstung unter einem vorgegebenen Schwellenwert liegt. umfassend:
Vergleichen der empfangenen Latenzmetrik mit vorbestimmten Messgrößen, welche Jitter und Verzögerung für jede Verkehrsklasse in Bezug auf die TID darstellen, und
Bestimmung der QoS-Erfüllung auf Basis des Vergleichs.

## Revendications

1. Un appareil réseau (100) pour un réseau de télécommunications (400), l'appareil réseau composé de:
un circuit de communication (103) configuré pour recevoir d'un point d'accès WLAN (200) une ou plusieurs métriques de latence associées à un identifiant de trafic, TID et un ensemble de services d'équipements utilisateurs; et
un processeur (105) configuré pour déterminer une exécution de qualité de service, QoS, pour l'équipement utilisateur basée sur la mesure de latence reçue,
où, en réponse au processeur (105) déterminant que la satisfaction de la QoS est inférieure à un seuil prédéterminé, le circuit de communication (103) est configuré comme suit:
transmettre au point d'accès Wi-Fi (200) une demande visant à augmenter la priorité des paquets destinés ou provenant de l'ensemble de services d'équipement utilisateur afin de réduire la latence du trafic associé à l'équipement utilisateur; et
demandent périodiquement des données représentant une métrique de latence mise à jour du trafic provenant du point d'accès Wi-Fi (200) appartenant à l'équipement de l'utilisateur.

2. Le dispositif réseau selon la revendication 1, dans lequel le circuit de communication (103) est conçu de telle sorte que, en réponse au processeur (105) déterminant sur la base de la métrique de latence mise à jour reçue que la satisfaction QoS de l'équipement utilisateur indique que la QoS de l'équipement utilisateur dépasse le seuil spécifié, une requête soit envoyée au point d'accès WLAN (200) pour cesser d'augmenter la priorité des paquets, destinés à ou provenant de l'équipement utilisateur.

3. Le dispositif réseau selon la revendication 1, où la métrique de latence du trafic associé à l'équipement utilisateur inclut les délais et/ou le jitter, et dans lequel le processeur (105) est configuré pour comparer la métrique de latence reçue avec des valeurs mesurées prédéfinies représentant le jitter et/ou le délai pour chaque classe de trafic par rapport au TID et détermine la satisfaction QoS à partir de la comparaison.

4. Un point d'accès WLAN (200) dans un réseau de télécommunications, le point d'accès WLAN contient:
un processeur (203);
une mémoire (205) couplée au processeur (203) et configurée pour stocker le code du programme exécutable par le processeur (203), le code du programme contenant une ou plusieurs instructions (207), provoquant l'activation du point d'accès WLAN (200):
mesurer une ou plusieurs métriques de latence du trafic associées à un identifiant de trafic, TID et un ensemble de services d'équipements utilisateurs;
transmettre la métrique de latence à un dispositif réseau (100) du réseau de télécommunications;
recevoir des données constituant une demande visant à augmenter la priorité des paquets destinés ou provenant de l'équipement utilisateur afin de réduire la latence du trafic associé à l'équipement utilisateur;
en réponse à la réception d'une demande d'augmentation de la priorité des paquets, modifier un point de code de services différencié, DSCP, dans un en-tête IP d'un paquet parmi les paquets destinés ou provenant de l'équipement utilisateur, assignant ainsi les paquets à une file multimédia sans fil de priorité supérieure, WMM; et
mesurez périodiquement la mesure de latence du trafic associé à l'équipement utilisateur.

5. Le point d'accès WLAN (200) selon la revendication 4, où le code programme contient en plus une ou plusieurs instructions (207) selon lesquelles le point d'accès WLAN alloue un temps de transmission supplémentaire à l'équipement utilisateur.

6. Une méthode pour réguler une qualité de service, QoS, dans un réseau qui comprend:
mesure (301), à un point d'accès Wi-Fi (200), une métrique de latence pour le trafic avec un identifiant de trafic, TID associé à un ensemble de services incluant l'équipement utilisateur;
transfert (303) de la métrique de latence vers un dispositif réseau (100);
détermination (305), en utilisant l'appareil réseau (100), si une qualité de service et une exécution QoS pour l'équipement utilisateur, déterminée sur la base de la métrique de latence reçue, est inférieure à un seuil prédéterminé;
sur la base de la conclusion, transmission (307) vers le point d'accès Wi-Fi (200) d'une demande visant à augmenter la priorité des paquets destinés ou provenant de l'ensemble de services d'équipement utilisateur afin de réduire la latence du trafic associé à l'équipement utilisateur;
en réponse à la réception de la demande, augmenter la priorité des paquets, modifier un point de code de services différenciés, DSCP, dans un en-tête IP d'un paquet parmi les paquets destinés ou provenant de l'équipement utilisateur, assignant ainsi les paquets à une file multimédia sans fil de priorité supérieure, WMM; et
mesure périodique de la mesure de latence du trafic associé à l'équipement utilisateur.

7. La méthode de la revendication 6 comprend également l'étape d'allouement d'un temps de transmission supplémentaire au point d'accès WLAN (200) pour l'équipement utilisateur.

8. La méthode de la revendication 6, comprenant en outre:
une demande pour cesser de modifier le DSCP, depuis l'appareil réseau (100) vers le point d'accès WLAN (200), une demande pour cesser de modifier le DSCP.

9. La méthode de chacune des revendications 6 à 8, comprenant en outre:
mesurez la métrique de latence en réponse à une demande générée par l'appareil réseau (100).

10. La méthode de l'une des revendications 6 à 9, où la métrique de latence inclut les délais et/ou le jitter, et où l'appareil réseau (100) est utilisé pour déterminer si la qualité de service, la QoS, la remplissance, déterminée sur la base de la métrique de latence reçue, est inférieure à un seuil spécifié pour l'équipement utilisateur, complet:
comparant la métrique de latence reçue à des mesures prédéterminées représentant la gigue et le délai pour chaque classe de trafic par rapport au TID, et
détermination de la satisfaction de la qualité de vie basée sur la comparaison.
